Europäisches Patentamt

European Patent Office

Office européen des brevets

(19)

(11) Veröffentlichungsnummer: **0 027 494**
**B1**

(12) **EUROPÄISCHE PATENTSCHRIFT**

(45) Veröffentlichungstag der Patentschrift:
02.06.82

(21) Anmeldenummer: **80103240.0**

(22) Anmeldetag: **11.06.80**

(51) Int. Cl³: **G 03 B 9/66**, G 03 B 17/14,
G 03 B 19/12

(54) Wechselobjektiv für photographische Kameras, insbesondere Spiegelreflexkameras.

(30) Priorität: **13.10.79 DE 2941601**

(43) Veröffentlichungstag der Anmeldung:
**29.04.81 Patentblatt 81/17**

(45) Bekanntmachung des Hinweises auf die Patenterteilung:
**02.06.82 Patentblatt 82/22**

(84) Benannte Vertragsstaaten:
**CH FR GB LI NL SE**

(56) Entgegenhaltungen:
**DE-A-2 017 032**
**FR-A-1 133 228**
**FR-A-1 316 123**
**US-A-2 348 510**

(73) Patentinhaber: **PRONTOR-WERK, Alfred Gauthier GmbH, Postfach 1122 Gauthierstrasse 56,
D-7547 Wildbad-5 (DE)**

(72) Erfinder: **Ludwig, Christian, Dreissentalstrasse 54,
D-7082 Oberkochen (DE)**

EP 0 027 494 B1

Wechselobjektiv für photographische Kameras, insbesondere Spiegelreflexkameras

Die Erfindung betrifft ein Wechselobjektiv für photographische Kameras, insbesondere Spiegelreflexkameras, mit einem gegenüber dem Kameragehäuse axial beweglich angeordneten, als Kraftspeicher für den Sektorenantrieb eine Feder aufweisenden Verschluß sowie mit einer die Funktion eines Spann- und Auslöseorgans ausübenden, teleskopartig ausgebildeten Kraftübertragungswelle, deren eines Ende getrieblich mit dem Spannorgan des Sektorenantriebs und deren anderes Ende beim Ansetzen bzw. Abnehmen des Objektivs mit einer kameraseitig angeordneten sowie mit dem Spannknopf der Kamera in Drehverbindung stehenden Treibwelle in bzw. außer formschlüssigen Eingriff bringbar ist.

Auswechselbar an eine Kamera ansetzbare Objektive der vorbeschriebenen Art lassen sich an eine Kamera nur unter der Voraussetzung anrenken, wenn die Schlüsselfläche der kameraseitigen Treibwelle und die der objektivseitigen Teleskopwelle eine kupplungsfähige, tangential zur ringförmigen Bajonett-Anschlußplatte gerichtete Lage einnehmen. Diese Einstellage der beiden miteinander in Formschluß bringbaren Schlüsselflächen ist bei üblicher Handhabung der Kamera und angerenktem Objektiv dann erreicht, wenn der kameraseitige Spannknopf betätigt und über die Treibwelle der objektivseitig angeordnete Verschluß in den Gespanntzustand überführt worden ist. Während die kameraseitige Treibwelle an einer Rücklaufbewegung durch eine vom Kameraauslöser aus betätigbare Sperre gehindert wird, erfolgt die Verriegelung der teleskopartigen Kraftübertragungswelle durch eine auf ihren kuppelbaren Wellenanteil einwirkende Riegelsperre, die beim Anrenken bzw. Abnehmen des Objektivs selbsttätig in bzw. außer Eingriff gebracht wird. Aufgrund dieser Art der Verriegelung steht die objektivseitig angeordnete Teleskop- bzw. Kraftübertragungswelle stets unter der vollen, von der Antriebsfeder des Objektivverschlusses ausgehenden Torsionsspannung, und zwar unabhängig davon, ob das Objektiv an die Kamera angeschlossen oder von dieser gelöst ist. Wird unter diesen physikalischen Voraussetzungen am Wechselobjektiv eine Entfernungseinstellung vorgenommen, so erfahren die Wellenteile der Kraftübertragungswelle infolge der relativen Verschiebung der Gehäuseteile ebenfalls eine Axialverschiebung. Diese kann sich unter der Einwirkung der auf der Kraftübertragungswelle ruhenden Drehmomentbelastung aber immer nur gegen den aus dieser Torsionsbeanspruchung resultierenden Gleitreibungswiderstand vollziehen, wobei die zu überwindende Widerstandsgröße letztlich abhängig ist von der Längenabmessung der Kraftübertragungswelle und diese wiederum von der Brennweite des Objektivs. Je größer die Brennweite eines Objektivs, desto länger gestaltet sich der ineinandergreifende Wellenzug der Teleskopwelle, um so größer der Widerstand, der bei der Entfernungseinstellung am Objektiv zu überwinden ist. Hinzu kommt noch, daß der Gleitreibungswiderstand auf Grund der exzentrischen, von der Objektivachse entfernten Lage der Teleskopwelle beim Einstellvorgang ein zusätzliches Kippmoment erzeugt wird. Diese Sachverhalte sind bestimmend dafür, daß bei Wechselobjektiven der bisherigen Bauart eine ruckfreie, zügige Einstellbewegung nur mit verhältnismäßig hohem Aufwand an Zeit und Kosten für Justage- und Selektionsarbeiten erzielt werden konnte.

Die vorstehend herausgestellten Nachteile eines Wechselobjektivs zu vermeiden und mit geringem baulichem Aufwand eine dahingehende Verbesserung zu erzielen, daß die Teleskopwelle von Torsionsbelastungen mit all ihren funktions- und kostenmäßig nachteiligen Auswirkungen freigestellt wird, so daß in gesicherter Weise die Fokussierung des Objektivs zügig und ruckfrei durchgeführt werden kann, ist Aufgabe der Erfindung.

Zur Lösung dieses Problems wird erfindungsgemäß vorgeschlagen, daß der dem Verschluß zugeordnete Wellenteil der teleskopartigen Kraftübertragungswelle zwei relativ zueinander verdrehbare Kupplungsteile besitzt, die gleichachsig sowie einander derart kraftschlüssig zugeordnet sind, daß in einer ersten, den Verschluß spannenden Drehrichtung der Welle der eine Kupplungsteil den anderen, am Eingang der Spannbewegung durch Einfall einer Sperre verriegelbaren Kupplungsteil mitnimmt, und daß in einer zweiten, der ersten Drehrichtung entgegengesetzt gerichteten Drehbewegung, die die Verschlußauslösung bewirkt, der nicht verriegelte Kupplungsteil in einer anfänglichen Bewegungsphase die Sperre am verriegelten Teil außer Eingriff bringt, so daß der freigesetzte Kupplungsteil den anderen Kupplungsteil an der Drehbewegung beteiligt.

Aufgrund der völligen Freistellung der Teleskopwelle von Drehmomentbelastungen während des Einstellvorgangs dadurch, daß die über diese Welle in den Verschluß eingebrachte und dort gespeicherte Antriebskraft nunmehr von einem verriegelbaren Teil aufgenommen wird, welcher an der Gleitreibung bei einer Relativverschiebung der Wellenteile nicht mehr beteiligt ist, konnte bei Wechselobjektiven mit eingebautem Verschluß die Schwierigkeiten, die einer zügigen und ruckfreien Fokussierung des Objektivs bisher im Wege standen, auf einfache Weise und mit relativ geringem baulichem Aufwand beseitigt werden. Als besonders vorteilhaft sind darüber hinaus jene Auswirkungen einzuschätzen, die sich aus der Vermeidung der Torsionsbelastung der Teleskopwelle in fertigungstechnischer Hinsicht dadurch ergeben, daß bei der Montage von Objektiven die bisher unumgängli-

che und zeitaufwendige, von wiederholtem Austausch von Wellenteilen begleitete Suche nach solchen Wellenteilen, die sich für einen Zusammenbau bei Gewährleistung der Gleitfähigkeit auch unter Torsionsbelastung eignen, in Wegfall gekommen ist. Da dieses Kriterium nicht mehr besteht, kann jedes der verfügbaren Wellenteile mit jedem beliebigen anderen Wellenteil kombiniert werden, womit zum einen die Fertigung vereinfacht und zum anderen sichergestellt werden konnte, daß alle verfügbaren Teile für die Montage verwertet werden können, und zwar auch solche Teile, auf deren Verwendung man bisher nur deshalb verzichten mußte, weil die an die Gleitfähigkeit der Teleskopwelle gestellten Anforderungen nach dem Zusammenbau der Wellenteile trotz gegebener Maßhaltigkeit nicht eingehalten werden konnten.

Durch die DOS 2 017 032 ist es zwar bekannt, die Verriegelungsmechanik des Verschlußantriebsglieds in das Wechselobjektiv zu integrieren und die Auslösung elektromagnetisch herbeizuführen. Dazu sind jedoch zusätzliche Übertragungswege elektrischer Art notwendig. Außerdem steht bei der bekannten Vorrichtung die teleskopartige Kraftübertragungswelle in gespanntem Zustand unter Torsionsbelastung.

In vorteilhafter Weiterbildung wird zur Erzielung einer einfachen kostensparenden Bauweise sowie zur Gewährleistung einer funktionssicheren Arbeitsweise vorgeschlagen, daß die beiden Kupplungsteile als zylindrische Körper ausgebildet und an ihren einander zugekehrten Stirnflächen mit Vorsprüngen versehen sind, und daß der eine dem Verschluß zugeordnete Kupplungsteil mit einer Riegelkante und der andere Kupplungsteil mit einer Hub- bzw. Verdrängungskurve versehen ist.

Nach einem weiteren Merkmal der Erfindung ist ferner vorgesehen, daß an dem einen Kupplungsteil ein zylindrischer Ansatz und an dem anderen Kupplungsteil eine diesen Ansatz aufnehmende Bohrung ausgebildet ist.

Einzelheiten der Erfindung sind aus der nachstehenden Beschreibung und der Zeichnung ersichtlich, die ein Ausführungsbeispiel des Gegenstandes der Erfindung veranschaulicht. Es zeigt

Fig. 1 ein mit den erfindungsgemäßen Merkmalen ausgestattetes, an eine photographische Kamera ansetzbares Wechselobjektiv,

Fig. 2 die Konzeption eines Wechselobjektivs mit einer Kraftübertragungswelle, wie man sie bisher ausgeführt hat,

Fig. 3a und 3b einen Querschnitt sowie einen Längsschnitt durch die Wellenteile der erfindungsgemäßen teleskopartigen Kraftübertragungswelle,

Fig. 4 zwei in kraftschlüssiger Verbindung miteinander stehende Kupplungsteile in perspektivischer Darstellung,

Fig. 5 die beiden Kupplungsorgane voneinander getrennt dargestellt,

Fig. 6 einen Längsschnitt durch die Kupplungsorgane,

Fig. 7 einen Querschnitt durch die Kupplungsorgane gemäß der in Fig. 6 angedeuteten Schnittlinie I-I, wobei der den Objektivverschluß im Gespanntzustand haltende Kupplungsteil durch eine Sperre verriegelt veranschaulicht ist und schließlich

Fig. 8 die gleiche Darstellung wie in Fig. 7 jedoch nach Entriegelung des den Objektivverschluß im Gespanntzustand haltenden Kupplungsteils.

Mit 1 ist in der Zeichnung das Gehäuse einer Kamera, beispielsweise einer Spiegelreflexkamera, und mit 2 ein vermittels Bajonettverschluß an das Kameragehäuse anrenkbares Wechselobjektiv mit eingebautem Zwischenlinsenverschluß bezeichnet. Die in der Zeichnung nur teilweise veranschaulichte Kamera ist von jener Bauart, bei der zur Betätigung der Spiegelmechanik und dergleichen eine federgetriebene Treibwelle 3 vorgesehen ist, die mit ihrem einen Ende durch die kameraseitige Bajonettanschlußplatte 4 hindurchgeführt und stirnseitig mit einem Kupplungszahn 3a versehen ist. In Spannstellung überführbar ist die Treibwelle 3 mit Hilfe eines von Hand zu betätigenden, nicht weiter veranschaulichten Spannkopfes und in Spannstellung haltbar sowie aus dieser Spannstellung freigebbar mittels eines durch Auslöseknopf 5 betätigbaren Riegelmechanismus, bestehend beispielsweise aus einem Sperrstift 6 und einer mit der Welle 3 drehfest verbundenen Scheibe 7. Die Zuordnung der Teile 6 und 7 des Riegelmechanismus ist dabei so getroffen, daß der federbelastete Stift 6 in eine umfangseitig an der Scheibe 7 vorgesehenen Aussparung 7a einfällt, sobald die Treibwelle 3 die Spannstellung erreicht hat. In dieser Position nimmt der Kupplungszahn 3a eine zur ringartigen Bajonettanschlußplatte 4 tangential gerichtete Stellung ein.

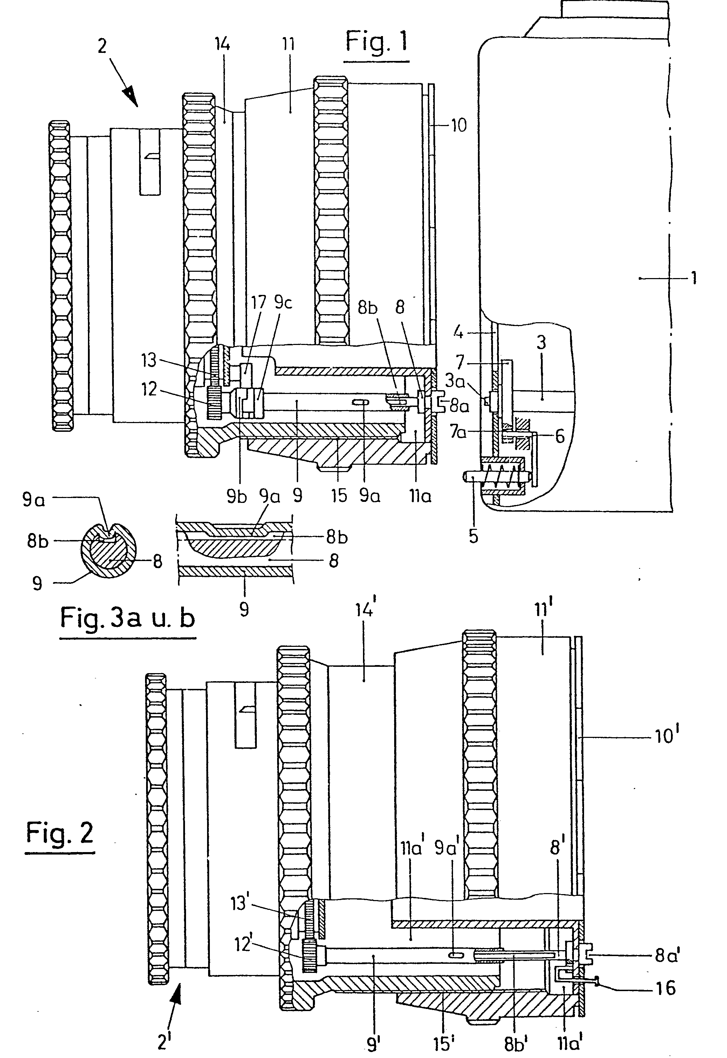

Mit der Treibwelle 3 in Wirkungsverbindung bringbar ist beim Anrenken des Wechselobjektivs 2 an das Kameragehäuse 1 eine teleskopartig ausgebildete Kraftübertragungswelle 8, 9. An deren aus der objektivseitigen Bajonettanschlußplatte 10 hervortretenden Ende ist zu diesem Zweck stirnseitig ein Kupplungsschlitz 8a eingearbeitet. Dieser Schlitz muß beim Anrenken des Wechselobjektivs 2 ebenso wie der Kupplungszahn 3a eine tangential gerichtete Einstellage einnehmen, was immer dann der Fall ist, wenn der Verschluß des Objektivs vor Abnahme der Wechseleinheit über die teleskopartige, die Funktion einer Spann- und Auslösewelle ausübende Kraftübertragungswelle zuvor in den Gespanntzustand gebracht worden ist. Dies gilt sowohl für die Teleskopwelle von Wechselobjektiven, wie man sie bisher verwendet hat und von denen eines in Fig. 2 veranschaulicht ist, als auch für Wechselobjektive der erfindungsgemäßen Ausführung gemäß Fig. 1. Da die beiden Wechseleinheiten, die teleskopartigen Kraftübertragungswellen selbstverständlich ausgenommen, als voll identisch bezeichnet werden können, haben auch ihre Teile gleiche

Bezugzeichen, diejenigen der bisherigen Ausführungsform gemäß Fig. 2 zusätzlich jedoch noch einen Strich erhalten.

Bei der bisherigen wie auch bei der erfindungsgemäß vorgeschlagenen Konzeption eines Wechselobjektivs 2 bzw. 2' ist die Teleskopwelle 8, 9 bzw. 8', 9' in einem ringförmigen Raum 11a bzw. 11a' des mit Bajonettanschlußplatte 10 bzw. 10' versehenen Gehäuseteils 11 bzw. 11' achsparallel zur Objektivachse verlaufend angeordnet. Außerdem ist die Welle vermittels eines Ritzels 12 bzw. 12' mit dem Spannorgan 13 bzw. 13' eines in einem Gehäusetubus 14 bzw. 14' eingebauten Zentralverschlusses in Eingriff gebracht. Der Gehäusetubus 14 bzw. 14' wiederum ist gegenüber dem Gehäuse 11 bzw. 11' zum Zwecke der Entfernungseinstellung bzw. Fokussierung relativ drehbar und vermittels eines in der Zeichnung lediglich symbolisch angedeuteten Stellgewindes 15 bzw. 15' axial verschiebbar eingerichtet. Die Anordnung des Verschlusses im tubusartigen Gehäuseteil 14 bzw. 14' ist in an sich bekannter Weise dabei so getroffen, daß der Verschluß an einer Axialverschiebung, nicht hingegen an einer Drehbewegung dieses Teils beteiligt ist, wenn der Tubus von Hand zwecks Fokussierung auf einen bestimmten Entfernungswert eingestellt wird.

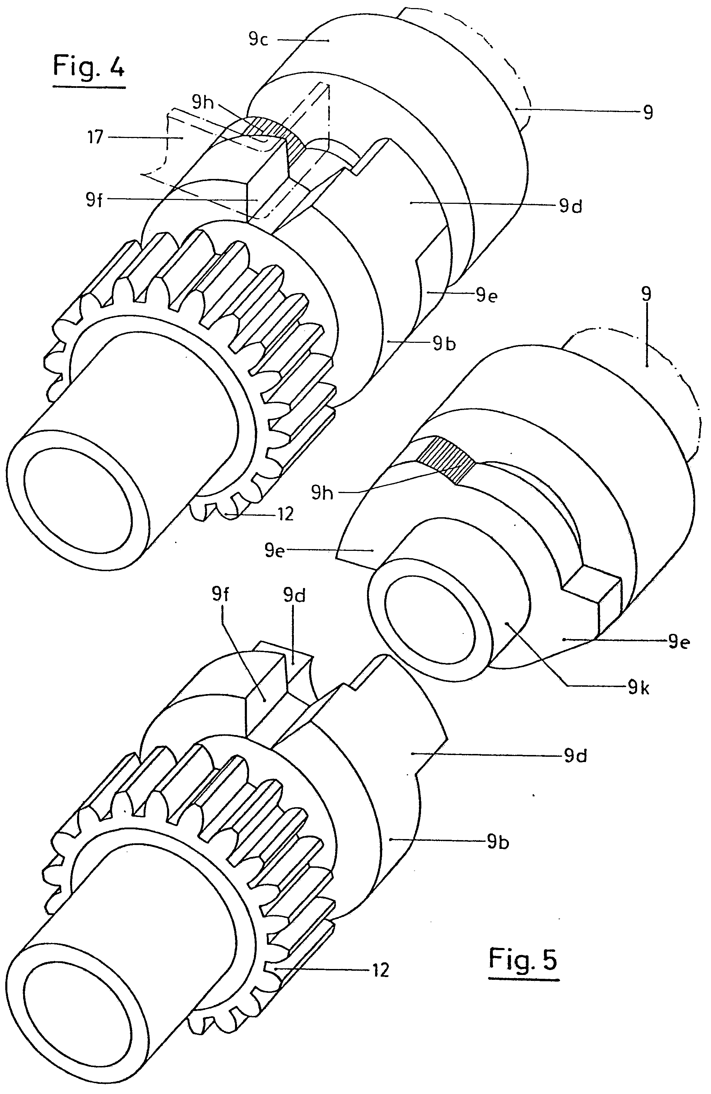

Zum Spannen und Auslösen des Objektivverschlusses dient, wie vorstehend bereits ausgeführt, die mit der Treibwelle 3 beim Anrenken des Wechselobjektivs 2 bzw. 2' an das Kameragehäuse 1 in drehfeste Verbindung bringbare Teleskopwelle 8, 9 bzw. 8', 9'. Einer von diesen beiden Wellenteilen, und zwar der Teil 8 bzw. 8' ist, wie insbesondere aus Fig. 3a und 3b ersichtlich, mit einer Längsnut 8b bzw. 8b' und der Teil 9 bzw. 9' mit einer in diese Längsnut eingreifenden Sicke 9a bzw. 9a' versehen. Wird das Wechselobjektiv 2 bzw. 2' an das Kameragehäuse 1 angesetzt, kommen die Schlüsselflächchen 3a und 8a bzw. 8a' der kameraseitigen Treibwelle 3 und der objektivseitigen Kraftübertragungswelle miteinander in formschlüssigen Eingriff. Die Folge davon ist, daß sowohl bei einer Drehung der Treibwelle 3 als auch bei einer Drehbewegung der teleskopartigen Kraftübertragungswelle 8, 9 bzw. 8', 9' die jeweils andere Welle an der Drehbewegung beteiligt wird. Wird die Kamera gespannt und hierzu der an ihr vorgesehene Spannknopf betätigt, wird sowohl die an der Treibwelle 3 angreifende, nicht weiter veranschaulichte Antriebsfeder als auch über die Kraftübertragungswelle 8, 9 bzw. 8', 9' die Antriebsfeder des objektivseitig angeordneten Verschlusses unter Spannung gesetzt. Am Ende dieses Spannvorgangs wird die Treibwelle 3 durch den Riegelmechanismus 6, 7 sowie durch den formschlüssigen Eingriff der Schlüsselfläche 3a bzw. 8a die objektivseitige Teleskopwelle an einer Rücklaufbewegung gehindert. Diese Sperrwirkung muß auch dann aufrecht erhalten bleiben, wenn das Objektiv abgenommen wird, wozu an den bisher verwendeten Objektiven gemäß Fig. 2 eine Sperre 16 vorgesehen ist, die mit dem Abnehmen des Objektivs selbsttätig in Wirkung tretend, auf den Wellenteil 8' der Teleskopwelle 8', 9' einwirkt. Andererseits ist diese Sperre so beschaffen, daß sie mit dem Anrenken des Objektivs und dem damit einhergehenden formschlüssigen Eingriff der Schlüsselfläche 3a und 8a' zwangsläufig aus der Sperrstellung herausbewegt, die Teleskopwelle 8', 9' jedoch an einer Drehbewegung durch den Formschluß mit der verriegelten Treibwelle 3 gehindert wird. Wird dann der Auslöseknopf 4 betätigt, gibt der Riegelmechanismus 5, 6 die Treibwelle 3 zur Ausführung einer Rotationsbewegung bzw. Auslösung des objektivseitig angeordneten Verschlusses frei. Diese bekannte Art der Verriegelung der objektivseitig angeordneten Teleskopwelle 8', 9' hat sich in der Praxis insofern als äußerst nachteilig und problematisch erwiesen, als in gespanntem Zustand des Verschlusses, der, wie vorstehend ausgeführt, Voraussetzung für die Durchführung eines Objektivwechsels ist, die volle Torsionsspannung der Verschluß-Antriebsfeder auf der Teleskopwelle 8', 9' ruht. Dies wiederum bedeutet aber, daß in den Wellenteilen 8', 9' der Teleskopwelle bei einer axialen Verschiebung Reibungswiderstände zu überwinden sind, die sich bei den bisherigen Wechselobjektiven insbesondere durch ungleichmäßigen Gang des Entfernungseinstellorgans nachteilig bemerkbar machten.

Diesen Mangel mit all seinen weiteren nachteiligen Auswirkungen, wie überhöhter Verschleiß, zeitraubende Überprüfung der Gleitfähigkeit von Wellenteilen bei der Montage, Demontage von Objektiven zum Auswechseln von Wellenteilen gegen andere usw. zu vermeiden, hat sich die erfindungsgemäße Anordnung eines Wechselobjektivs gemäß Fig. 1 zum Ziele gesetzt. Eines der erfindungswesentlichen Merkmale beruht darauf, daß der eine Wellenteil 9 der teleskopartigen Kraftübertragungswelle 8, 9 welcher die Spann- und Auslösekraft in den Verschluß einleitet, gemäß Darstellung in Fig. 4—8 in zwei gegeneinander verdrehbare, kraftschlüssig miteinander verbindbare Kupplungsteile 9b und 9c unterteilt worden ist. Vorzugsweise ist am Teil 9b das Ritzel 12 ausgebildet, während der Teil 9c drehfest mit dem eigentlichen Wellenteil 9 und dieser wiederum durch Eingriff einer Sicke 9a in eine Längsnut 8b mit dem Wellenteil 8 auf Drehmitnahme verbunden ist. An den einander zugekehrten Stirnflächen der vorzugsweise zylindrische Form aufweisenden Kupplungsteile 9b und 9c sind Vorsprünge bzw. Mitnehmer 9d bzw. 9e ausgebildet, die zweckdienlicher Weise so gestaltet und dimensioniert sind, daß der eine Teil gegenüber dem anderen über einen gewissen Drehwinkelbereich hinweg eine relative Drehbewegung ausführen kann, ohne daß der andere Teil dabei an dieser Drehbewegung beteiligt ist. Andererseits sind die Vorsprünge bzw. Mitnehmer 9d bzw. 9e einander so zugeordnet, daß bei Betätigung des kameraseiti-

gen Spannknopfes das der Kraftübertragungswelle 8, 9 über die Treibwelle 3 vermittelte Drehmoment durch kraftschlüssige Anlage des Mitnehmers 9e am Mitnehmer 9d, ferner über das Ritzel 12 und das Spannorgan 13 auf den objektivseitigen Verschluß übertragen wird. Am Ende dieser Spannbewegung wird der Teil 9b verriegelt, wozu an diesem eine Riegelkante 9f ausgebildet und ihm selbst eine Riegelsperre 17 zugeordnet ist. Mit dem Einfall der Riegelsperre 17 am Teil 9b wird am Ende des Spannvorgangs die vom Federantrieb des Verschlusses ausgehende Antriebskraft an einem Teil abgefangen, der bei einer Axialverschiebung der Teleskopwelle Gleitreibungskräften nicht ausgesetzt ist.

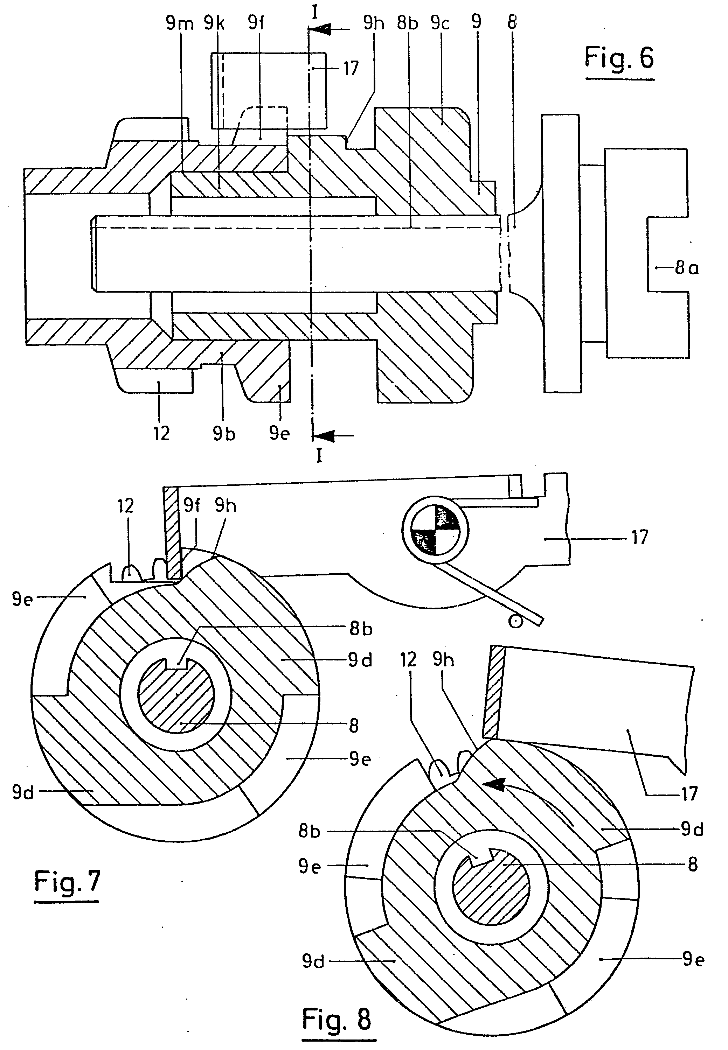

Wird bei einer Kamera mit angerenktem Wechselobjektiv gemäß Fig. 1 der Kameraauslöser 5 betätigt, erfolgt dadurch zunächst eine Freigabe der kameraseitig angeordneten Treibwelle 3, die unter dem Einfluß einer auf sie einwirkenden Feder eine Drehbewegung ausführt. Aufgrund der formschlüssigen Verbindung 3a, 8a der Treibwelle 3 mit der Kraftübertragungswelle 8, 9 wird letztere an dieser Drehbewegung beteiligt. Dies hat zur Folge, daß eine am Teil 9c ausgebildete Schrägfläche 9h, wie in Fig. 8 veranschaulicht, wirksam werdend, die Riegelsperre 17 aus der von ihr bisher eingenommenen Sperrlage herausbewegt. Ist der bislang verriegelte Kupplungsteil 9b frei, führt dieser, durch die Antriebsfeder des Verschlusses angetrieben, eine Drehbewegung unter gleichzeitiger Mitnahme des Kupplungsteils 9c aus, wobei sich die Sektoren des Verschlusses in Offen- und wieder in Schließstellung bewegen. Erfolgt nach Verschlußablauf eine erneute Betätigung des kameraseitigen Spannknopfes, wird das von diesem ausgehende Drehmoment wiederum über die Treibwelle 3 auf die Kraftübertragungswelle 8, 9 übertragen, wobei der Kupplungsteil 9c den Kupplungsteil 9b mitnimmt und dabei die Spannkraft über das Ritzel 12 und das Spannorgan 13 an den Objektivverschluß weiterleitet. Durch Einfall der Riegelsperre 17 an der Riegelkante 9f des Teils 9b wird einerseits der Verschlußantrieb blockiert und andererseits der mit dem Kupplungsteil 9c in drehfester Verbindung stehende Wellenteil 9 der Teleskopwelle von Torsionsspannungen absolut freigestellt. Zum Zwecke der koaxialen Führung des einen Kupplungsteils 9b gegenüber dem anderen Kupplungsteil 9c ist an einem derselben ein zylindrischer Führungszapfen 9k und an dem anderen Ende eine der Aufnahme dieses Zapfens dienende Axialbohrung 9m ausgebildet, wie insbesondere aus Fig. 6 ersichtlich.

Im vorbeschriebenen Ausführungsbeispiel dient die erfindungsgemäß ausgebildete Teleskopwelle zum Übertragen von Spann- und Auslösekräften auf einen Objektivverschluß.

Darauf ist ihr Anwendungsbereich indessen nicht beschränkt; sie könnte insbesondere auch bei einem Wechselobjektiv, das nicht über einen Objektivverschluß sondern nur über eine Blende, vorzugsweise Springblende verfügt, zum Übertragen von Kräften Anwendung finden. Dies folgt ohne weiteres daraus, daß im vorbeschriebenen Ausführungsbeispiel die Erfindung anhand eines Wechselobjektivs mit Zwischenlinsenverschluß und Springblende erläutert ist, deren Antriebsfedern über die Teleskopwelle unter Spannung gesetzt werden.

## Patentansprüche

1. Wechselobjektiv für photographische Kameras, insbesondere Spiegelreflexkameras, mit einem gegenüber dem Kameragehäuse axial beweglich angeordneten, eine Feder als Kraftspeicher für den Sektorenantrieb aufweisenden Verschluß sowie mit einer die Funktion eines Spann- und Auslöseorgans ausübenden, teleskopartig ausgebildeten Kraftübertragungswelle, deren eines Ende mit dem Spannorgan des Sektorenantriebs getrieblich verbunden und deren anderes Ende mit einer kameraseitig angeordneten sowie mit dem Spannknopf der Kamera in Drehverbindung stehenden Treibwelle beim Ansetzen bzw. Abnehmen des Objektivs in bzw. außer formschlüssigen Eingriff bringbar ist, dadurch gekennzeichnet, daß der dem Verschluß zugeordnete Wellenteil (9) der teleskopartigen Kraftübertragungswelle (8, 9) zwei relativ zueinander verdrehbare Kupplungsteile (9b und 9c) besitzt, die gleichachsig sowie einander derart kraftschlüssig zugeordnet sind, daß in einer ersten, den Verschluß spannenden Drehrichtung der eine Kupplungsteil (9c) den anderen, am Ende der Spannbewegung durch Einfall einer Sperre (17) verriegelbaren Kupplungsteil (9b) mitnimmt, und daß in einer zweiten, der ersten Drehrichtung entgegengesetzt gerichteten Drehbewegung, die die Verschlußauslösung bewirkt, der nicht verriegelte Kupplungsteil (9c) in einer anfänglichen Bewegungsphase die Sperre am verriegelten Teil (9b) außer Eingriff bringt, so daß der freigesetzte Kupplungsteil (9b) den anderen Kupplungsteil (9c) an der Drehbewegung beteiligt.

2. Wechselobjektiv nach Patentanspruch 1, dadurch gekennzeichnet, daß die beiden Kupplungsteile (9b und 9c) als zylindrische Körper ausgebildet und an ihren einander zugekehrten Stirnflächen mit Vorsprüngen (9e und 9d) versehen sind, und daß der eine dem Verschluß zugeordnete Kupplungsteil (9b) mit einer Riegelkante (9f) und der andere Kupplungsteil (9c) mit einer Hub- bzw. Verdrängungskurve (9h) versehen ist.

3. Wechselobjektiv nach Patentanspruch 1 und 2, dadurch gekennzeichnet, daß an dem einen Kupplungsteil (9c) ein zylindrischer Ansatz (9k) und an dem anderen Kupplungsteil (9b) eine diesen Ansatz aufnehmende Bohrung (9m) ausgebildet ist.

## Claims

1. Interchangeable lens for photographic cameras, especially mirror reflex cameras comprising a shutter, which is disposed axially displaceable relative to the camera housing and has a spring as the force storage means for the sector drive, and comprising a force transmission shaft, which is of a telescopic design and functions as a cocking and releasing member, one end of the shaft being drivably connected to the cocking member of the sector drive and the other end of the shaft being engageable or disengageable, in a form-fit manner, with a drive shaft, which is disposed on the camera side and is rotationally connected to the cocking button of the camera, when the lens is attached or detached respectively, characterised in that the shaft part (9) of the telescopic force transmission shaft (8, 9) is associated with the shutter and has two coupling parts (9b and 9c) which are rotatable relative to one another and are associated coaxially with one another and in a force-locking manner relative to one another such that, in a first rotational direction of the shaft which cocks the shutter, the one coupling part (9c) carries along with it the other coupling part (9b), which is lockable at the end of the cocking movement by the dropping-in of a bolt (17), and in that, in a second rotational movement which is in the opposite direction to the first rotational direction and causes the release of the shutter, the unlocked coupling part (9c) disengages the bolt on the locked part (9b) in an initial movement phase so that the freed coupling part (9b) involves the other coupling part (9c) in the rotational movement.

2. Interchangeable lens according to claim 1, characterised in that the two coupling parts (9b and 9c) are designed as cylindrical bodies and are provided with projections (9e and 9d) on their faces which face one another, and in that the one coupling part (9b), associated with the shutter, is provided with a locking edge (9f) and the other coupling part (9c) is provided with a lifting or displacement cam (9h).

3. Interchangeable lens according to claims 1 and 2, characterised in that a cylindrical shoulder (9k) is formed on the one coupling part (9c) and a bore (9m), which accommodates this shoulder, is formed in the other coupling part (9b).

## Revendications

1. Objectif interchangeable pour appareils photographiques, en particulier pour appareils reflex à miroir, comportant un obturateur qui est monté mobile en direction axiale par rapport au boîtier de l'appareil et qui présente un ressort en tant qu'accumulateur de force pour la commande des secteurs, ainsi qu'un arbre de transmission de force qui est réalisé sous forme télescopique, qui exerce la fonction d'un organe d'armement et de déclenchement et dont l'une des extrémités est raccordée par engrènement à l'organe d'armement de la commande des secteurs, tandis que son autre extrémité peut être mise en prise ou hors de prise par emboîtemet, lors de la mise en place ou du démontage de l'objectif, avec un arbre moteur qui est disposé du côté appareil photographique et qui est solidaire à la rotation du bouton d'armement de l'appareil, caractérisé en ce que la partie (9) de l'arbre télescopique de transmission de force (8, 9) qui est associée à l'obturateur comporte deux éléments d'accouplement (9b et 9c) qui peuvent tourner l'un par rapport à l'autre et qui sont associés coaxialement et par application de force de telle manière que dans un premier sens de rotation de l'arbre, armant l'obturateur, l'un des éléments d'accouplement (9c) entraîne l'autre élément d'accouplement (9b) qui est verrouillable à la fin du mouvement d'armement par enclenchement d'un déclic (17), et que dans un second mouvement de rotation, dirigé en sens inverse du premier sens de rotation et provoquant le déclenchement de l'obturateur, l'élément d'accouplement non verrouillé (9c) mette, dans une phase initiale de mouvement, le déclic hors de prise avec l'élément verrouillé (9b) de telle manière que l'élément d'accouplement libéré (9b) fasse participer l'autre élément d'accouplement (9c) au mouvement de rotation.

2. Objectif interchangeable selon la revendication 1, caractérisé en ce que les deux éléments d'accouplement (9b et 9c) sont réalisés sous forme de corps cylindriques et sont munis de saillies (9e et 9d) sur leurs surfaces frontales dirigées l'une vers l'autre, et en ce que l'élément d'accouplement (9b) associé à l'obturateur comporte une arête de verrouillage (9f), tandis que l'autre élément d'accouplement (9c) est muni d'une came de soulèvement ou de délogement (9h).

3. Objectif interchangeable selon la revendication 1 ou 2, caractérisé en ce qu'il est formé, sur l'un des éléments d'accouplement (9c), un appendice cylindrique (9k) et, dans l'autre élément d'accouplement (9b), une forure (9m) destinée à recevoir cet appendice.

Fig. 1

Fig. 3a u. b

Fig. 2

0 027 494

Fig. 4

9c

9h

17

9f

9d

9e

9b

12

9

9

9h

9e

9e

9k

9f    9d

9d

9b

12

Fig. 5

9

Fig. 6

Fig. 7

Fig. 8